(19) Europäisches Patentamt
European Patent Office
Office européen des brevets

(11) EP 1 235 870 B1

(12) # EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **00993230.2**

(22) Anmeldetag: **18.11.2000**

(51) Int Cl.:
***C08F 293/00*** *(2006.01)* ***C08L 53/00*** *(2006.01)*
***C10M 143/10*** *(2006.01)* ***C08F 2/38*** *(2006.01)*
***C08K 5/00*** *(2006.01)*

(86) Internationale Anmeldenummer:
**PCT/EP2000/011502**

(87) Internationale Veröffentlichungsnummer:
**WO 2001/040339 (07.06.2001 Gazette 2001/23)**

(54) **BLOCKCOPOLYMERE SOWIE VERFAHREN ZUR HERSTELLUNG UND VERWENDUNG**

BLOCK COPOLYMERS AND METHOD FOR THE PRODUCTION AND UTILIZATION THEREOF

COPOLYMERES EN BLOC, PROCEDE DE FABRICATION ET UTILISATION

(84) Benannte Vertragsstaaten:
**AT BE CH CY DE DK ES FI FR GB GR IE IT LI LU MC NL PT SE TR**

(30) Priorität: **30.11.1999 US 450744**

(43) Veröffentlichungstag der Anmeldung:
**04.09.2002 Patentblatt 2002/36**

(73) Patentinhaber: **Evonik Oil Additives GmbH**
**64293 Darmstadt (DE)**

(72) Erfinder:
- **SCHERER, Markus**
  **66822 Lebach (DE)**
- **SOUCHIK, Joan**
  **Blue Bell, PA 19422 (US)**
- **BOLLINGER, Joseph, Martin**
  **N. Wales, PA 19454 (US)**

(56) Entgegenhaltungen:
**EP-A- 0 945 474** **US-A- 4 940 761**
**US-A- 5 098 959** **US-A- 5 219 945**
**US-A- 5 399 620** **US-A- 5 789 487**
**US-A- 5 807 937**

- **KOTANI Y ET AL: "LIVING RANDOM COPOLYMERIZATION OF STYRENE AND METHYL METHACRYLATE WITH A RU(II) COMPLEX AND SYNTHESIS OF ABC-TYPE BLOCK-RANDOM COPOLYMERS" MACROMOLECULES,US,AMERICAN CHEMICAL SOCIETY. EASTON, Bd. 31, Nr. 17, 25. August 1998 (1998-08-25), Seiten 5582-5587, XP000776908 ISSN: 0024-9297**
- **KOTANI Y ET AL: "LIVING RADICAL POLYMERIZATION OF ALKYL METHACRYLATES WITH RUTHENIUM COMPLEX AND SYNTHESIS OF THEIR BLOCK COPOLYMERS" MACROMOLECULES,US,AMERICAN CHEMICAL SOCIETY. EASTON, Bd. 29, Nr. 22, 21. Oktober 1996 (1996-10-21), Seiten 6979-6982, XP000629329 ISSN: 0024-9297**
- **CASSEBRAS M ET AL: "SYNTHESIS OF DI- AND TRIBLOCK COPOLYMERS OF STYRENE AND BUTYL ACRYLATE BY CONTROLLED ATOM TRANSFER RADICAL POLYMERIZATION" MACROMOLECULAR: RAPID COMMUNICATIONS,WILEY VCH, WEINHEIM,DE, Bd. 20, Nr. 5, Mai 1999 (1999-05), Seiten 261-264, XP000847861 ISSN: 1022-1336**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Schmieröladditiv oder Biodieselkraftstoffadditiv aufweisend Blockcopolymere, und Konzentrate und Schmieröle davon und ein Verfahren zur Herstellung davon, sowie deren Verwendung als Stockpunktserniedriger.

Schmieröle, insbesondere Mineralöle, die beispielsweise durch Destillation aus Erdölen gewonnen werden, enthalten in der Regel langkettige n-Alkane, die einerseits ein gutes Viskositäts-/Temperaturverhalten bewirken, andererseits aber beim Abkühlen in kristalliner Form ausfallen und dadurch das Fließen der Öle beeinträchtigen oder völlig verhindern ("stocken"). Eine Verbesserung der Tieftemperaturfließeigenschaften kann beispielsweise durch Entparaffinierung erreicht werden. Allerdings steigen die Kosten erheblich an, wenn eine vollständige Entparaffinierung erzielt werden soll. Daher wird ein Pourpoint bis zu einem Bereich von ca. -15°C durch partielle Entparaffinierung erzielt, der durch Zugabe von sogenannten Pourpoint-Erniedrigern oder Stockpunktsverbesserern, weiter herabgesetzt werden kann. Diese Mittel können bereits in Konzentrationen von 0,01 bis 1 Gew.-% den Stockpunkt wirksam herabsetzen.

Die Wirkungsweise dieser Verbindungen ist noch nicht vollständig aufgeklärt. Allerdings wird angenommen, daß paraffinähnliche Verbindungen in die wachsenden Paraffinkristallflächen eingebaut werden und so verhindern, daß eine weitere Kristallisation und insbesondere die Bildung von ausgedehnten Kristallverbänden eintritt.

Eine stockpunktverbessernde Wirkung bestimmter Strukturelemente ist bekannt. So zeigen insbesondere Polymere mit ausreichend langen Alkylseitenketten eine pourpointverbessernde Wirkung. Hierbei wird angenommen, daß diese Alkylgruppen in die wachsenden Paraffinkristalle eingebaut werden und das Kristallwachstum stören (Vergleiche Ullmanns Enzyklopädie der technischen Chemie, 4. Auflage, Band 20, Verlag Chemie, 1981, S. 548). Von technisch anwendbaren Pourpointerniedrigern muß darüber hinaus verlangt werden, daß sie gute thermische, oxidative und chemische Stabilität, Scherfestigkeit usw. besitzen. Darüber hinaus sollten die Stockpunktverbesserer kostengünstig herstellbar sein, da sie in großen Mengen eingesetzt werden.

Poly(meth)acrylate mit langkettigen Alkylresten werden weithin als Stockpunkterniedrgier eingesetzt. Diese Verbindungen sind beispielsweise in US-PS 2 091 627, US-PS 2 100 993, US-PS 2 114 233 und EP-A-0 236 844 beschrieben. Im allgemeinen werden diese Pourpoint-Erniedriger durch radikalische Polymerisation erhalten. Dementsprechend können sie kostengünstig hergestellt werden. Die Tieftemperatureigenschaften, die sich beispielsweise aus den Stockpunkten gemäß ASTM D-97, den Minirotationsviskosimetrie-Versuchswerten gemäß ASTM D-4684 oder den Scanning-Brookfieldresultaten gemäß ASTM D-5133 ergeben, sind für vielen Anwendungen brauchbar, trotzdem genügen die Tieftemperatureigenschaften vielen Anforderungen noch nicht.

Hierbei sollte berücksichtigt werden, daß wirksamere Additive in einer geringeren Menge zugegeben werden könnten, um eine gewünschte Fließeigenschaft bei tiefen Temperaturen zu erzielen. Bei den eingesetzten Mengen an Schmierölen und Biodieselkraftstoffen ergäben sich auch bei relativ geringen Unterschieden erhebliche Einsparpotentiale. EP 0 945 474, US 5 219 945, US 5 807 937, und US 5 763 548 offenbaren Blockcopolymere auf Basis von Acrylaten.

In Anbetracht des Standes der Technik ist es nun Aufgabe der vorliegenden Erfindung Additive zur Verfügung zu stellen, durch die im Vergleich zu herkömmlichen Zusätzen verbesserte Fließeigenschaften von Schmierölen und Biodieselkraftstoffen bei tiefen Temperaturen erzielt werden können. Des weiteren war Aufgabe der vorliegenden Erfindung Additive zur Verfügung zu stellen, die eine hohe Stabilität gegen Oxidation und thermische Belastung sowie eine hohe Scherfestigkeit besitzen. Zugleich sollten die neuen Additive einfach und kostengünstig herstellbar sein.

Gelöst werden diese sowie weitere nicht explizit genannte Aufgaben, die jedoch aus den hierin einleitend diskutierten Zusammenhängen ohne weiteres ableitbar oder erschließbar sind, durch Blockcopolymere mit allen Merkmalen des Patentanspruchs 1. Zweckmäßige Abwandlungen der erfindungsgemäßen Copolymere werden in den auf Anspruch 1 rückbezogenen Ansprüchen unter Schutz gestellt. Hinsichtlich des Konzentrats als Schmieröladditiv liefert Anspruch 9 die Lösung der zugrunde liegenden Aufgabe, während Ansprüche 11 und 14 Schmieröle bzw. Dieselkraftstoffe schützen, die erfindungsgemäße Copolymere aufweisen. Bezüglich des Verfahrens zur Herstellung von Blockcopolymeren und deren Verwendung stellen die Ansprüche 16 und 17 eine Lösung des Problems dar.

Dadurch, daß man eine Mischung von olefinisch ungesättigten Monomeren polymerisiert, die aus

a) 0,5 bis 20 Gew.-% einer oder mehreren ethylenisch ungesättigten Esterverbindungen der Formel (I)

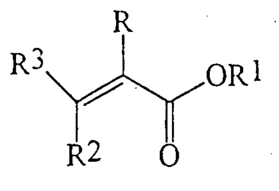

(I),

worin R Wasserstoff oder Methyl darstellt, $R^1$ einen linearen oder verzweigten Alkylrest mit 1 bis 5 Kohlenstoffatomen

bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet,

b) 10 bis 98 Gew.-% einer oder mehreren ethylenisch ungesättigten Esterverbindungen der Formel (II)

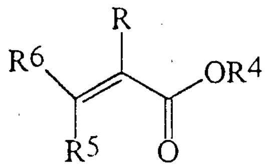

(II),

worin R Wasserstoff oder Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR" darstellen, worin R" Wasserstoff oder eine Alkylgruppe mit 6 bis 15 Kohlenstoffatomen bedeutet,

c) 0,5 bis 60 Gew. -% einer oder mehreren ethylenisch ungesättigten Esterverbindungen der Formel (III)

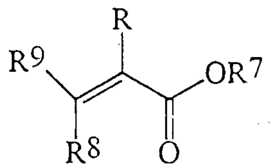

(III),

worin R Wasserstoff oder Methyl darstellt, $R^7$ einen linearen oder verzweigten Alkylrest mit 16 bis 30 Kohlenstoffatomen bedeutet, $R^6$ und $R^9$ unabhängig Wasserstoff oder eine Gruppe der Formel -COOR"' darstellen, worin R"' Wasserstoff oder eine Alkylgruppe mit 16 bis 30 Kohlenstoffatomen bedeutet,

d) 0 bis 50 Gew.-% Comonomer

besteht, jeweils bezogen auf das Gesamtgewicht der ethylenisch ungesättigten Monomere, wobei man die Mischung der ethylenisch ungesättigten Monomere während des Kettenwachstums diskontinuierlich verändert, sind Blockcopolymere erhältlich, die eine hohe Wirksamkeit als Stockpunktverbesserer oder Fließverbesserer aufweisen. Die stockpunktsverbessernde Wirkung kann beispielsweise gemäß ASTM D 97 bestimmt werden.

Darüber hinaus zeigen Schmieröle, die die erfindungsgemäßen Blockcopolymere umfassen, hervorragende Minirotationsviskosimetriewerte (MRV), die gemäß ASTM D 4684 erhalten werden können, und Scanning-Brookfieldresultate, wie diese sich nach ASTM D 5133 ergeben.

Biodieselkraftstoffe, die einen Gehalt an Blockcopolymere der vorliegenden Erfindung aufweisen, zeigen bei Cold-Filter-Plugging-Point-Messungen nach IP 309 oder Low-Temperature-Flow-Test-Versuchen gemäß ASTM D 4539 außergewöhnliche Resultate.

Falls ein bestimmte Fließeigenschaften bei einer vorgegebenen Temperatur erzielt werden sollen, so kann die Menge an Additiv durch die vorliegende Erfindung vermindert werden.

Zugleich lassen sich durch die erfindungsgemäßen Blockcopolymere eine Reihe weiterer Vorteile erzielen. Hierzu gehören u.a.:

⇒ Die Copolymere der vorliegenden Erfindung zeigen eine enge Molekulargewichtsverteilung. Hierdurch zeigen sie eine hohe Stabilität gegen Schereinwirkungen.

⇒ Die erfindungsgemäßen Blockcopolymere können kostengünstig hergestellt werden.

⇒ Die Blockcopolymere zeigen eine hohe Oxidationsstabilität und sind chemisch sehr beständig.

⇒ Die Blockcopolymere zeigen in vielen unterschiedlichen Mineralölen oder Biodieselkraftstoffen eine hervorragende Wirksamkeit.

Blockcopolymere bezeichnen Copolymere, die mindestens zwei Blöcke aufweisen. Blöcke sind hierbei Segmente des Copolymers, die eine konstante Zusammensetzung aus einem oder mehreren Monomerbausteinen aufweisen. Die einzelnen Blöcke können aus verschiedenen Monomeren aufgebaut sein. Des weiteren können sich die Blöcke auch nur durch die Konzentration an verschiedenen Monomerbausteinen unterscheiden, wobei innerhalb eines Blockes eine statistische Verteilung der verschiedenen Monomerbausteine vorliegen kann.

Gemäß einem interessanten Aspekt der vorliegenden Erfindung zeichnen sich die verschiedenen Blöcke durch einen Konzentrationsunterschied von mindestens eines Monomerbausteins von 5% oder mehr, bevorzugt mindestens 10% und besonders bevorzugt mindestens 20% aus, ohne daß hierdurch eine Beschränkung erfolgen soll.

Der Terminus "Konzentration der Monomerbausteine" bezieht sich auf die Zahl an diesen Einheiten, die von den eingesetzten Monomeren abgeleitet sind, bezogen auf die Gesamtzahl an wiederkehrenden Einheiten innerhalb eines Blockes. Der Konzentrationsunterschied ergibt sich aus der Differenz zwischen den Konzentrationen mindestens eines Monomerbausteins zweier Blöcke.

Dem Fachmann ist die Polydispersität von Polymeren bewußt. Dementsprechend beziehen sich auch die Angaben bezüglich des Konzentrationsunterschiedes auf ein statisches Mittel über alle Polymerketten der entsprechenden Segmente.

Die Länge der Blöcke kann in weiten Bereichen variieren. Erfindungsgemäß weisen die Blöcke mindestens 30, vorzugsweise mindestens 50, besonders bevorzugt mindestens 100 und ganz besonders bevorzugt mindestens 150 Monomereinheiten auf.

Gemäß einem bevorzugten Aspekt der vorliegenden Erfindung zeigen die Längen der verschiedenen Blöcke des Copolymeren ein Verhältnis im Bereich von 3 zu 1 bis 1 zu 3, vorzugsweise 2 zu 1 bis 1 zu 2 und besonders bevorzugt 1,5 zu 1 bis 1 zu 1,5, obwohl auch andere Längenverhältnisse der Blöcke zueinander von der vorliegenden Erfindung umfaßt werden sollen.

Neben Diblockcopolymeren sind auch Blockcopolymere, die mindestens drei, bevorzugt mindestens vier Blöcke aufweisen, Gegenstand der vorliegenden Erfindung.

Die Zusammensetzungen, aus denen die erfindungsgemäßen Blockcopolymere erhalten werden, enthalten insbesondere (Meth)acrylate, Maleate und/oder Fumarate, die unterschiedliche Alkoholreste aufweisen. Der Ausdruck (Meth)acrylate umfaßt Methacrylate und Acrylate sowie Mischungen aus beiden. Diese Monomere sind weithin bekannt. Hierbei kann der Alkylrest linear, cyclisch oder verzweigt sein.
Mischungen, aus denen die erfindungsgemäßen Copolymere erhältlich sind, können 0,5 bis 20 Gew.-% einer oder mehreren ethylenisch ungesättigten Esterverbindungen der Formel (I) enthalten

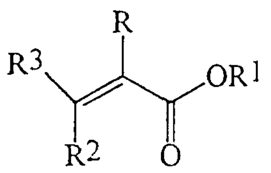

(I),

worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet.

Beispiele für Komponente a) sind unter anderem (Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat und Pentyl(meth)acrylat;
Cycloalkyl(meth)acrylate, wie Cyclopentyl(meth)acrylat; (Meth)acrylate, die sich von ungesättigten Alkoholen ableiten, wie 2-Propinyl(meth)acrylat, Allyl(meth)acrylat und Vinyl(meth)acrylat.

Als wesentlichen Bestandteil enthalten die zu polymerisierenden Zusammensetzungen 10 bis 98 Gew.-%, insbesondere 20 bis 95 Gew.-% einer oder mehreren ethylenisch ungesättigten Esterverbindungen der Formel (II)

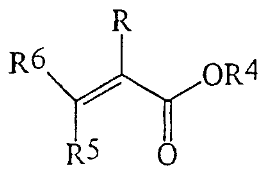

(II),

worin R Wasserstoff oder Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR" darstellen, worin R" Wasserstoff

oder eine Alkylgruppe mit 6 bis 15 Kohlenstoffatomen bedeutet.

Zu diesen gehören unter anderem

(Meth)acrylate, Fumarate und Maleate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat;

(Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat,

Cyclohexyl(meth)acrylat, Bornyl(meth)acrylat; sowie die entsprechenden Fumarate und Maleate.

Darüber hinaus können die erfindungsgemäß zu verwendenden Monomermischungen 0,5 bis 60 Gew.-% einer oder mehreren ethylenisch ungesättigten Esterverbindungen der Formel (III) aufweisen

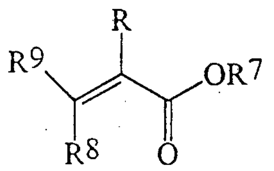
(III),

worin R Wasserstoff oder Methyl darstellt, $R^7$ einen linearen oder verzweigten Alkylrest mit 16 bis 30 Kohlenstoffatomen bedeutet, $R^8$ und $R^9$ unabhängig Wasserstoff oder eine Gruppe der Formel -COOR''' darstellen, worin R''' Wasserstoff oder eine Alkylgruppe mit 16 bis 30 Kohlenstoffatomen bedeutet.

Beispiele für Komponente c) sind unter anderem (Meth)acrylate, die sich von gesättigten Alkoholen ableiten, wie Hexadecyl(meth)acrylat, 2-Methylhexadecyl(meth)acrylat,

Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; Cycloalkyl(meth)acrylate, wie 2,4,5-Tri-t-butyl-3-Vinylcyclohexyl(meth)acrylat, 2,3,4,5-Tetra-t-butylcyclohexyl(meth)acrylat; Oxiranylmethacrylate, wie 10,11-Epoxyhexadecylmethacrylat; sowie die entsprechenden Fumarate und Maleate.

Die Esterverbindungen mit langkettigem Alkoholrest, insbesondere die Komponenten (b) und (c), lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7 - 11 und Acropol® 91 Ugine Kuhlmann.

Von den ethylenisch ungesättigten Esterverbindungen sind die (Meth)acrylate gegenüber den Maleaten und Fumaraten besonders bevorzugt, d.h. $R^2$, $R^3$, $R^5$, $R^6$, $R^8$ und $R^9$ der Formeln (I), (II) und (III) stellen in besonders bevorzugten Ausführungsformen Wasserstoff dar.

Die Komponente d) umfaßt insbesondere ethylenisch ungesättigte Monomere, die sich mit den ethylenisch ungesättigten Esterverbindungen der Formeln (I), (II) und/oder (III) copolymerisieren lassen.

Jedoch sind Comonomere zur Polymerisation gemäß der vorliegenden Erfindung besonders geeignet, die der Formel entsprechen:

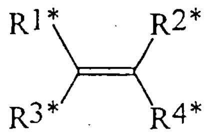

worin $R^{1*}$ und $R^{2*}$ unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkyl-

gruppe ist (beispielsweise $CF_3$), $\alpha$, $\beta$- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise $CH_2$=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)$R^{5*}$, C(=Y*)$NR^{6*}R^{7*}$, Y*C(=Y*)$R^{5*}$, $SOR^{5*}$, $SO_2R^{5*}$, $OSO_2R^{5*}$, $NR^{8*}SO_2R^{5*}$, $PR^{5*}_2$, P(=Y*)$R^{5*}_2$, Y*$PR^{5*}_2$, Y*P(=Y*)$R5^*_2$, $NR^{8*}_2$ welche mit einer zusätzlichen $R^{8*}$-, Aryl- oder Heterocyclyl-Gruppe quaternärisiert sein kann, wobei Y* $NR^{8*}$, S oder O, vorzugsweise O sein kann; $R^{5*}$ eine Alkylgruppe mit 1 bis 20 Kohlenstoffatomen, eine Alkylthio mit 1 bis 20 Kohlenstoffatomen, $OR^{15}$ ($R^{15}$ ist Wasserstoff oder ein Alkalimetall), Alkoxy von 1 bis 20 Kohlenstoffatomen, Aryloxy oder Heterocyklyloxy ist; $R^{6*}$ und $R^{7*}$ unabhängig Wasserstoff oder eine Alkylgruppe mit 1 bis 20 Kohlenstoffatomen sind, oder $R^{6*}$ und $R^{7*}$ können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und $R^{8*}$ Wasserstoff, lineare oder verzweigte Alkyl- oder Arylgruppen mit 1 bis 20 Kohlenstoffatomen sind;

$R^{3*}$ und $R^{4*}$ unabhängig ausgewählt aus der Gruppe bestehend aus Wasserstoff, Halogen (vorzugsweise Fluor oder Chlor), Alkylgruppen mit 1 bis 6 Kohlenstoffatomen und $COOR^{9*}$, worin $R^{9*}$ Wasserstoff, ein Alkalimetall oder eine Alkylgruppe mit 1 bis 40 Kohlenstoffatomen ist, sind, oder $R^{1*}$ und $R^{3*}$ können zusammen eine Gruppe der Formel $(CH_2)_{n'}$ bilden, welche mit 1 bis 2n' Halogenatomen oder $C_1$ bis $C_4$ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste $R^{1*}$, $R^{2*}$, $R^{3*}$ und $R^{4*}$ Wasserstoff oder Halogen sind.

Hierzu gehören unter anderem Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol (meth)acrylat, 1, 10-Decandiol (meth) acrylat;

Aminoalkyl (meth) acrylate, wie N-(3-Dimethylaminopropyl)methacrylamid, 3-Diethylaminopentylmethacrylat, 3-Dibutylaminohexadecyl(meth)acrylat; Nitrile der (Meth)acrylsäure und andere stickstoffhaltige Methacrylate, wie N-(Methacryloyloxyethyl)diisobutylketimin, N-(Methacryloyloxyethyl)dihexadecylketimin, Methacryloylamidoacetonitril, 2-Methacryloyloxyethylmethylcyanamid, Cyanomethylmethacrylat;

Aryl(meth)acrylate, wie Benzylmethacrylat oder Phenylmethacrylat, wobei die Arylreste jeweils unsubstituiert oder bis zu vierfach substituiert sein können;

carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon, N-(2-Methacryloyloxypentadecyl)-2-pyrrolidinon, N-(3-Methacryloyloxyheptadecyl)-2-pyrrolidinon;

Glycoldimethacrylate, wie 1,4-Butandiolmethacrylat, 2-Butoxyethylmethacrylat, 2-Ethoxyethoxymethylmethacrylat, 2-Ethoxyethylmethacrylat;

Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat;

Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat;

Oxiranylmethacrylate, wie 2,3-Epoxybutylmethacrylat, 3,4-Epoxybutylmethacrylat, 10,11-Epoxyundecylmethacrylat, 2,3-Epoxycyclohexylmethacrylat; Glycidylmethacrylat;

Phosphor-, Bor- und/oder Silicium-haltige Methacrylate, wie

2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat, 2-(Dibutylphosphono)ethylmethacrylat, 2,3-Butylenmethacryloylethylborat, Methyldiethoxymethacryloylethoxysilan, Diethylphosphatoethylmethacrylat;

schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis (methacryloyloxyethyl) sulfid;

Trimethacrylate, wie Trimethyloylpropantrimethacrylat; Vinylhalogenide, wie beispielsweise Vinylchlorid, Vinylfluorid, Vinylidenchlorid und Vinylidenfluorid;

heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;

Vinylester, wie Vinylacetat;

Styrol, substituierte Styrole mit einem Alkylsubstituenten in der Seitenkette, wie z. B. $\alpha$-Methylstyrol und $\alpha$-Ethylstyrol,

substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure;
Diene wie beispielsweise Divinylbenzol.

Ganz besonders bevorzugte Mischungen weisen Methylmethacrylat, Butylmethacrylat, Laurylmethacrylat, Stearylmethacrylat und/oder Styrol auf.

Diese Komponenten können einzeln oder als Mischungen eingesetzt werden. Voraussetzung ist allerdings, daß mindestens zwei verschiedene Monomere polymerisiert werden.

Blockcopolymere der vorliegenden Erfindung können beispielsweise dadurch erhalten werden, daß man die Mischung der ethylenisch ungesättigten Monomere, d.h. die relative Konzentration der einzelnen Monomere zueinander, während des Kettenwachstums diskontinuierlich ändert. Dies bedeutet, daß eine Polymerkette bei mindestens zwei verschiedenen Zusammensetzungen der Monomere wächst. Diskontinuierlich bedeutet, daß die Änderung der Mischung der ethylenisch ungesättigten Monomere schnell im Bezug auf die Reaktionsdauer bei konstanter Monomerzusammensetzung, also dem Kettenwachstum des jeweiligen Blockes erfolgt. Dies kann in weiten Bereichen schwanken. Im allgemeinen ist das Verhältnis aus Zugabezeit zur Reaktionsdauer bei konstanter Monomerzusammensetzung kleiner 1 zu 10, vorzugsweise 1 zu 20 und besonders bevorzugt kleiner 1 zu 100.

Hierzu können verschiedene Monomere oder Mischungen von Monomeren chargenweise der Reaktionsmischung zugeben werden. Hierbei sollte der lebende Charakter von ATRP-Verfahren berücksichtigt werden, so daß die Reaktion zwischen der Zugabe der verschiedenen Monomere bzw. Mischungen von Monomeren über einen längeren Zeitraum unterbrochen werden kann. Ein ähnliches Ergebnis kann auch dadurch erzielt werden, daß man bei einer kontinuierlichen Zugabe von Monomeren deren Zusammensetzungen zu bestimmten Zeitpunkten sprunghaft ändert.

Die zuvor genannten Monomere werden mittels Initiatoren, die eine übertragbare Atomgruppe aufweisen, polymerisiert. Im allgemeinen lassen sich diese Initiatoren durch die Formel $Y\text{-}(X)_m$ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 darstellt, abhängig von der Funktionalität der Gruppe Y. Falls $m > 1$ ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und $-CO_2R$, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; aromatische Gruppen wie Phenyl oder Naphthyl; Aminogruppen, Ethergruppen, Estergruppen sowie Halogenide.

Zu den aromatischen Resten gehören beispielsweise Phenyl, Xylyl, Toluyl, Naphthyl oder Biphenyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

$R^{11}R^{12}R^{13}C\text{-}X$

$R^{11}C(=O)\text{-}X$

$R^{11}R^{12}R^{13}Si\text{-}X$

$R^{11}R^{12}N\text{-}X$

$R^{11}N\text{-}X_2$

$(R^{11})_nP\ (O)_m\text{-}X_{3\text{-}n}$

$(R^{11}O)\ _nP\ (O)\ _m\text{-}X_{3\text{-}n}$ und

$(R^{11})\ (R^{12}O)\ P(O)\ _m\text{-}X$,

worin X ausgewählt ist aus der Gruppe bestehend aus Cl, Br, I, $OR^{10}$, [wobei $R^{10}$ eine Alkylgruppe von 1 bis 20 Kohlenstoffatomen, wobei jedes Wasserstoffatom unabhängig durch ein Halogenid, vorzugsweise Fluorid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 5 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] $SR^{14}$, $SeR^{14}$, $OC(=O)R^{14}$, $OP(=O)R^{14}$, $OP(=O)\ (OR^{14})_2$, $OP(=O)OR^{14}$, $O\text{-}N(R^{14})_2$, $S\text{-}C(=S)N(R^{14})_2$, CN, NC, SCN, CNS, OCN, CNO und $N_3$ darstellt, wobei $R^{14}$ eine Arylgruppe oder eine lineare oder verzweigte Alkylgruppe mit 1 bis 20, vorzugsweise 1 bis 10 Kohlenstoffatomen bedeutet, wobei zwei $R^{14}$-Gruppen, falls vorhanden, zusammen einen 5, 6 oder 7-gliedrigen heterocyclischen Ring bilden können; und

$R^{11}$, $R^{12}$ und $R^{13}$ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, $R^{8*}{}_3Si$, $C(=Y^*)R^{5*}$, $C(=Y^*)NR^{6*}R^{7*}$, wobei $Y^*$, $R^{5*}$, $R^{6*}$ und $R^{7*}$ wie zuvor definiert sind, COCl, OH, (vorzugsweise ist einer der Reste $R^{11}$, $R^{12}$ und $R^{13}$ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei $C_1$ bis $C_6$ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus $C_1$-$C_4$ Alkoxy, Aryl, Heterocyclyl, $C(=Y^*)R^{5*}$ (wobei $R^{5*}$ wie zuvor definiert ist), $C(=Y^*)NR^{6*}R^{7*}$ (wobei $R^{6*}$ und $R^{7*}$ wie zuvor definiert sind), Oxiranyl und Glycidyl substituiert sind; (vorzugsweise sind nicht mehr als 2 der Reste $R^{11}$, $R^{12}$ und $R^{13}$ Wasserstoff, besonders bevorzugt ist maximal einer der Reste $R^{11}$, $R^{12}$ und $R^{13}$ Wasserstoff);

m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;

Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrom(meth)an, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von $10^{-4}$ mol/L bis 3 mol/L, vorzugsweise im Bereich von $10^{-3}$ mol/L bis $10^{-1}$ mol/L und besonders bevorzugt im Bereich von $5*10^{-2}$ mol/L bis $5*10^{-1}$ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von $10^{-4}$ zu 1 bis 0,5 zu 1, besonders bevorzugt im Bereich von $5*10^{-3}$ zu 1 bis $5*10^{-2}$ zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. $Y(M)_z$-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Cr, Co, Ne, Sm, Mn, Mo, Ag, Zn, Pd, Pt, Re, Rh, Ir, In, Yd, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar $Cu^+/Cu^{2+}$ oder $Fe^{2+}/Fe^{3+}$ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören $Cu_2O$, CuBr, CuCl, CuI, $CuN_3$, CuSCN, CuCN, $CuNO_2$ $CuNO_3$, $CuBF_4$, $Cu(CH_3COO)$ $Cu(CF_3COO)$, $FeBr_2$, $RuBr_2$, $CrCl_2$ und $NiBr_2$.

Es können aber auch Verbindungen in höheren Oxidationsstufen, wie beispielsweise $CuBr_2$, $CuCl_2$, CuO, $CrCl_3$, $Fe_2O_3$ und $FeBr_3$, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel $R^{16}$-Z- $(R^{16}\text{-}Z)_m$-$R^{17}$ darstellen, worin $R^{16}$ und $R^{17}$ unabhängig H, $C_1$ bis $C_{20}$ Alkyl, Aryl, Heterocyclyl bedeuten, die ggf. substituiert sein können. Zu diesen Substituenten zählen u. a. Alkoxyreste und die Alkylaminoreste. $R_{16}$ und $R^{17}$ können ggf. einen gesättigten, ungesättigten oder heterocyclischen Ring bilden. Z bedeutet O, S, NH, $NR^{19}$ oder $PR^{19}$, wobei $R^{19}$ die gleiche Bedeutung wie $R^{16}$ hat. $R^{18}$ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der $CH_2$-Gruppen des Ringes durch Heteroatomgruppen, wie O, S, NH, und/oder NR, ersetzt sind, wobei der Rest R, die gleich Bedeutung hat, wie $R^{16}$ hat.

Eine weitere Gruppe von geeigneten Liganden läßt sich durch die Formel

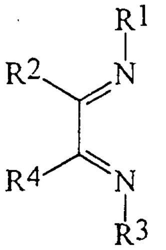

(IV)

darstellen, worin $R^1$, $R^2$, $R^3$ und $R^4$ unabhängig H, $C_1$ bis $C_{20}$ Alkyl-, Aryl-, Heterocyclyl- und/oder Heteroarylrest bedeuten, wobei die Reste $R^1$ und $R^2$ bzw. $R^3$ und $R^4$ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Neben dem zuvor erläuterten ATRP-Verfahren können die erfindungsgemäßen Blockcopolymere beispielsweise auch über RAFT-Methoden ("Reversible Addition Fragmentation Chain Transfer") erhalten werden. Dieses Verfahren ist beispielsweise in WO 98/01478 ausführlich dargestellt, worauf für Zwecke der Offenbarung ausdrücklich Bezug genommen wird.

Die Polymerisation kann bei Normaldruck, Unter- od. Überdruck durchgeführt werden. Auch die Polymerisationstemperatur ist unkritisch. Im allgemeinen liegt sie jedoch im Bereich von -20°-200°C, vorzugsweise 0° - 130°C und besonders bevorzugt 60° - 120°C.

Die Polymerisation kann mit oder ohne Lösungsmittel durchgeführt werden. Der Begriff des Lösungsmittels ist hierbei weit zu verstehen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 50 mbar. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:

0,7 - 1,0 %,

gering verzweigte Alkane mit 18 bis 31 C-Atome:

1,0 - 8,0 %,

Aromaten mit 14 bis 32 C-Atomen:

0,4 - 10,7 %,

Iso- und Cyclo-Alkane mit 20 bis 32 C-Atomen:

60,7- 82,4 %,

polare Verbindungen:

0,1 - 0,8 %,

Verlust:

6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel können unter anderem in einer Menge von 1 bis 99 Gew.-%, bevorzugt von 5 bis 95 Gew.-%, besonders bevorzugt von 5 bis 60 Gew.-% und ganz besonders bevorzugt 10 bis 50 Gew.-%, bezogen auf das Gesamtgewicht der Mischung, eingesetzt werden, ohne daß hierdurch eine Beschränkung erfolgen soll.

Die so hergestellten Polymere weisen im allgemeinen ein Molekulargewicht im Bereich von 1 000 bis 1 000 000 g/mol, vorzugsweise im Bereich von $10*10^3$ bis $500*10^3$ g/mol und besonders bevorzugt im Bereich von $20*10^3$ bis $300*10^3$ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen die erfindungsgemäßen Polymere eine Polydispersität, die durch $M_w/M_n$ gegeben ist, im Bereich von 1 bis 12, vorzugsweise 1 bis 4,5, besonders bevorzugt 1 bis 3 und ganz besonders bevorzugt 1,05 bis 2 auf.

Verwendung finden erfindungsgemäße Copolymere unter anderem als Zusatz zu Schmierölen und Biodieselkraftstoffen, um den Pourpoint zu erniedrigen. Daher sind weitere interessante Aspekte der vorliegenden Erfindung Schmieröle und Biodieselkraftstoffe, welche erfindungsgemäße Copolymere enthalten.

Die erfindungsgemäßen Copolymere können einzeln oder als Mischung verwendet werden, wobei der Begriff Mischung weit zu verstehen ist. Hiervon werden sowohl Mischungen von verschiedenen Copolymeren der vorliegenden Erfindung als auch Mischungen von erfindungsgemäßen Copolymeren mit herkömmlichen Polymeren umfaßt.

Biodieselkraftstoffe sind an sich bekannt und bezeichnen natürliche, insbesondere nachwachsende Öle, die zum Betreiben von speziell angepaßten Dieselmotoren geeignet sind. Zu diesen Kraftstoffen gehören beispielsweise pflanzliche Öle, wie Rapsöl.

Beispiele für Schmieröle sind unter anderem Motorenöle, Getriebeöle, Turbinenöle, Hydraulikflüssigkeiten, Pumpenöle, Wärmeübertragungsöle, Isolieröle, Schneidöle und Zylinderöle.

Diese Schmieröle weisen im allgemeinen ein Grundöl sowie ein oder mehrere Additive auf, die in der Fachwelt weithin bekannt sind.

Als Grundöl ist im Prinzip jede Verbindung geeignet, die für eine hinreichenden Schmierfilm sorgt, der auch bei erhöhten Temperaturen nicht reißt. Zur Bestimmung dieser Eigenschaft können beispielsweise die Viskositäten dienen, wie sie beispielsweise für Motoröle in den SAE-Spezifikationen festgelegt sind.

Zu den hierfür geeigneten Verbindungen gehören unter anderem natürliche Öle, mineralische Öle und synthetische Öle sowie Mischungen hiervon.

Natürliche Öle sind tierische oder pflanzliche Öle, wie beispielsweise Klauenöle oder Jojobaöle. Mineralische Öle wurden zuvor als Lösungsmittel ausführlich beschrieben. Sie sind insbesondere hinsichtlich ihres günstigen Preises vorteilhaft. Synthetische Öle sind unter anderem organische Ester, synthetische Kohlenwasserstoffe, insbesondere Polyolefine, die den zuvor genannten Anforderungen genügen. Sie sind meist etwas teurer als die mineralischen Öle, haben aber Vorteile hinsichtlich ihrer Leistungsfähigkeit.

Diese Grundöle können auch als Mischungen eingesetzt werden und sind vielfach kommerziell erhältlich.

Die erfindungsgemäßen Copolymere können auch als Bestandteil von sogenannten DI-Paketen (Detergent-Inhibitor) oder anderen Konzentraten, die Schmierölen zugesetzt werden, eingesetzt werden, die weithin bekannt sind. Diese Konzentrate umfassen 15 bis 85 Gew.-% eines oder mehrerer Copolymere der vorliegenden Erfindung. Darüber hinaus kann das Konzentrat zusätzlich organische Lösungsmittel, insbesondere ein Mineralöl und/oder ein synthetisches Öl aufweisen.

Neben dem Grundöl enthalten Schmieröle oder die zuvor genannten Konzentrate im allgemeinen Additive. Zu diesen Additiven gehören unter anderem Viskositätsindexverbesserer, Antioxidantien, Alterungsschutzmittel, Korrosionsinhibitoren, Detergentien, Dispergentien, EP-Additive, Entschäumungsmittel, Reibungsminderer, Stockpunkterniedriger, Farbstoffe, Geruchsstoffe und/oder Demulgatoren.

Die Additive bewirken ein günstiges Fließverhalten bei tiefen und hohen Temperaturen (Verbesserung des Viskositätsindexes), sie suspendieren Feststoffe (Detergent-Dispersant-Verhalten), neutralisieren saure Reaktionsprodukte u. bilden einen Schutzfilm auf der Zylinderoberfläche (EP-Zusatz, für "extreme pressure"). Weitere wertvolle Hinweise findet der Fachmann in Ullmann's Encyclopedia of Industrial Chemistry, Fifth Edition auf CD-ROM, Ausgabe 1998.

Die Mengen, in denen diese Additive eingesetzt werden, sind von dem Anwendungsgebiet des Schmiermittels abhängig. Im allgemeinen beträgt der Anteil des Grundöls jedoch zwischen 25 bis 90 Gew.-%, bevorzugt 50 bis 75 Gew.-%. Der Anteil von Copolymeren der vorliegenden Erfindung in Schmierölen liegt vorzugsweise im Bereich von 0,01 bis 10 Gew.-%, besonders bevorzugt 0,01 bis 2 Gew.-%. Biodieselkraftstoffe weisen die Copolymere der vorliegenden Erfindung vorzugsweise in einer Menge im Bereich von 0,01 bis 10 Gew.-%, besonders bevorzugt 0,01 bis 2 Gew.-% auf.

Nachfolgend wird die Erfindung durch Beispiele und Vergleichsbeispiele eingehender erläutert, ohne daß die Erfindung auf diese Beispiele beschränkt werden soll.

In den nachfolgenden Versuchen wurden die Stockpunkte gemäß ASTM D 97-93, die MRV-Werte gemäß ASTM 4684-92 und die Scanning-Brookfield-Resultat gemäß
ASTM D 5133-90 bestimmt. Der Gelation-Index ist das Maximum der ersten mathematischen Ableitung des Viskositäts-Temperatur-Diagrammms der Scanning-Brookfield-Messung. Hinsichtlich des Yield-Stress-Wertes der MRV-Messung sollte berücksichtigt werden, daß Meßwerte kleiner als 35 Pa aufgrund der Meßgenauigkeit mit dem Wert 0 angegeben sind.

Beispiele 1 und 2

Die ATRP-Polymerisationsversuche wurden in einem Rundkolben durchgeführt, der mit Säbelrührer, Heizpilz, Stickstoffüberleitung, Intensivkühler und Tropftrichter ausgestattet war. Dabei wurden 100 g des CEMA/LMA-Gemisches (CEMA: Gemisch von langkettigen Methacrylaten, welches aus der Reaktion von Methylmethacrylat mit ®Nafol 1620 von Condea erhalten wurde; LMA: Gemisch von langkettigen Methacrylaten, welches aus der Reaktion von Methylmethacrylat mit ®Lorol von Henkel KGaA erhalten wurde) mit einem 45-55-Gewichtsverhältnis zusammen mit 50 g Toluol (= Beispiel 1) oder 50 g Mineralöl der Fa. Petro Canada (= Beispiel 2) im Reaktionskolben vorgelegt und durch Trockeneiszugabe und Überleiten von Stickstoff inertisiert. Anschließend wurde die Mischung unter Rühren auf 95°C erwärmt. Während des Aufwärmvorgangs wurden 0,48 g CuBr und 1,15 g PMDETA (Pentamethyldiethylentriamin) bei etwa 70°C zugegeben. Nach Erreichen der vorgegebenen Temperatur von 95°C wurden 0,65 g EBiB (Ethyl-2-bromisobutyrat) beigefügt, wobei eine heterogene Mischung gebildet wurde, da der Katalysator nur unvollständig gelöst wurde.

Nach einer Reaktionszeit von ca. 2 Stunden wurden innerhalb von 5 Minuten 100 g eines CEMA/LMA-Gemisches mit einem CEMA:LMA-Gewichtsverhältnis von 15:85 der Mischung beigefügt. Nach Beendigung der Zugabe wurde weitere 4 Stunden bei 95°C gerührt. Anschließend wurde die Mischung auf Raumtemperatur abgekühlt, mit etwa 400 ml Toluol verdünnt und über 10 g $Al_2O_3$ filtriert, um Verunreinigungen abzutrennen. Danach wurde das verwendete Toluol mit einem Rotationsverdampfer abdestilliert. Diese Mischung wurde mittels GPC analysiert, um das Zahlenmittel des Molekulargewichts (Mn) und die Polydispersität Mw/Mn (PDI) zu bestimmen.

Anschließend wurde die in Tabelle 1 angegebene Menge des so erhaltenen Polymers in ein 15W-40 (SAE) Mineralöl der Fa. Sunoco gegeben. Anschließend wurde die Wirksamkeit des Additivs gemäß den zuvor angegebenen Versuchen getestet. Die erhaltenen Ergebnisse sind in Tabelle 1 dargelegt.

Die Synthese der Vergleichsbeispiele erfolgte gemäß US 5 368 761. Zunächst wurden gemäß dieser Vorschrift 100 g CEMA/LMA-Gemisch mit einem 45-55-Gewichtsverhältnis zusammen mit 50 g Toluol polymerisiert. Die erhaltene Mischung wurde mittels GPC analysiert. Es wurde ein Polymer mit einem Zahlenmittel des Molekulargewichts von 46100 g/mol und einer Polydispersität von 2,11 erhalten.

Der Versuch zur Herstellung konventioneller Polymere wurde wiederholt, wobei jedoch 100 g CEMA/LMA-Gemisch mit einem 15-85-Gewichtsverhältnis verwendet wurde. Das so erhaltene Polymer wies ein Zahlenmittel des Molekulargewichts von 44800 g/mol und eine Polydispersität von 2,02 auf.

Beide Polymere wurden ebenfalls in das Mineralöl der Fa. Farmland gegeben, um die Wirksamkeit der Polymere anhand der zuvor angegebenen Normen zu untersuchen. Die in Tabelle angegebene Menge bezieht sich auf die Summe eines 1:1 Gemisches beider Polymere (0.018 Gew.-% 15:85-Polymer und 0,018 45:55-Polymer). Die erhaltenen Ergebnisse sind ebenfalls in Tabelle 1 dargestellt.

Tabelle 1

| | Beispiel 1 | Beispiel 2 | Vergleich |
|---|---|---|---|
| Mn | 57800 | 62800 | 46100; 44800 |
| PDI | 4,18 | 1, 41 | 2,11; 2,02 |
| Polymergehalt der Mischung [Gew.-%] | 0, 036 | 0, 03 | 0,018 + 0,018 = 0,036 |
| Stockpunkt | -27 | -24 | -24 |
| MRV | | | |
| Viskosität [Pa*s] | 22, 5 | 19,2 | 72, 1 |
| Yield Stress [Pa] | 0 | 0 | 175 |
| Scanning-Brookfield | | | |
| Viskosität bei -20°C {mPa*s} | 11400 | 8400 | 32900 |
| Temp. bei 30000 mPa*s [°C] | -24,2 | -26,9 | -19,4 |
| Gelation-Index bei °C | 7,8 bei -19 | 6,9 bei -28 | 32,3 bei -18 |

## Patentansprüche

1. Schmieröladditiv oder Biodieselkraftstoffadditiv aufweisend Blockcopolymere, dadurch erhältlich, daß man eine Mischung von olefinisch ungesättigten Monomeren polymerisiert, die aus

a) 0,5 bis 20 Gew.-% einer oder mehreren ethylenisch ungesättigten Esterverbindungen der Formel (I)

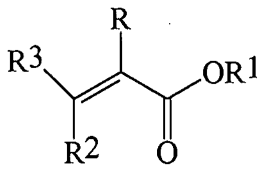

(I),

worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 98 Gew.-% einer oder mehreren ethylenisch ungesättigten Esterverbindungen der Formel (II)

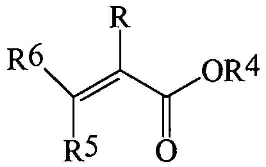

(II),

worin R Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR" darstellen, worin R" Wasserstoff oder eine Alkylgruppe mit 6 bis 15 Kohlenstoffatomen bedeutet,
c) 0,5 bis 60 Gew.-% einer oder mehreren ethylenisch ungesättigten Esterverbindungen der Formel (III)

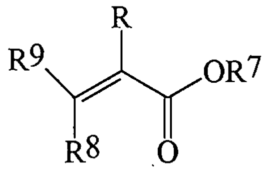

(III),

worin R Wasserstoff oder Methyl darstellt, $R^7$ einen linearen oder verzweigten Alkylrest mit 16 bis 30 Kohlenstoffatomen bedeutet, $R^8$ und $R^9$ unabhängig Wasserstoff oder eine Gruppe der Formel -COOR"' darstellen, worin R"' Wasserstoff oder eine Alkylgruppe mit 16 bis 30 Kohlenstoffatomen bedeutet und
d) 0 bis 50 Gew.-% Comonomer, umfassend ethylenisch ungesättigte Monomere, die sich mit den ethylenisch ungesättigten Esterverbindungen der Formeln (I), (II) und/oder (III) copolymerisieren lassen und ausgewählt sind aus der Gruppe der Hydroxylalkyl(meth)acrylate, Aminoalkyl(meth)acrylate, Aryl(meth)acrylate, Methacrylate von Etheralkoholen, heterocyclische (Meth)acrylate, Vinylester, Styrol, substituierte Styrole mit einem Alkylsubstituenten in der Seitenkette, heterocyclische Vinylverbindungen, besteht, jeweils bezogen auf das Gesamtgewicht der ethylenisch ungesättigten Monomere

bestehen, wobei die Mischung der ethylenisch ungesättigten Monomere während des Kettenwachstums derart diskontinuierlich verändert wurde, dass man Blockcopolymere erhält, deren Blöcke mindestens 30 Monomereinheiten aufweisen,
und wobei die zuvor genannten Monomere mittels Initiatoren, die eine übertragbare Atomgruppe aufweisen, und in Gegenwart von Katalysatoren, die mindestens ein Übergangsmetall oder eine Übergangsmetallverbindung umfassen, die mit dem Initiator, bzw. der Polymerkette, die eine übertragbare Atomgruppe aufweist, einen Redox-Zyklus bilden kann, und in Gegenwart von Liganden, die mit dem oder den metallischen Katalysatoren eine Koordinationsverbindung bilden können, polymerisiert wurden.

2. Schmieröladditiv oder Biodieselkraftstoffadditiv aufweisend Blockcopolymere gemäß Anspruch 1, **dadurch gekennzeichnet, daß** die Blöcke mindestens 50 Monomereinheiten aufweisen.

3. Schmieröladditiv oder Biodieselkraftstoffadditiv aufweisend Blockcopolymere gemäß Anspruch 1 oder 2, **dadurch**

**gekennzeichnet, daß** die Längen der verschiedenen Blöcke des Copolymeren ein Verhältnis im Bereich von 3 zu 1 bis 1 zu 3 aufweisen.

**4.** Schmieröladditiv oder Biodieselkraftstoffadditiv aufweisend Blockcopolymere gemäß einem oder mehreren der vorhergehenden Ansprüche, **dadurch gekennzeichnet, daß** das Blockcopolymer mindestens drei Blöcke aufweist.

**5.** Schmieröladditiv oder Biodieselkraftstoffadditiv aufweisend Blockcopolymere gemäß einem oder mehreren der vorhergehenden Ansprüche, **dadurch gekennzeichnet, daß** sich die verschiedenen Blöcke nur in der Konzentration der Monomerbausteine unterscheiden.

**6.** Schmieröladditiv oder Biodieselkraftstoffadditiv aufweisend Blockcopolymere gemäß einem oder mehreren der vorhergehenden Ansprüche, **dadurch gekennzeichnet, daß** sich die verschiedenen Blöcke durch einen Konzentrationsunterschied von mindestens eines Monomerbausteins von 5% oder mehr auszeichnen.

**7.** Schmieröladditiv oder Biodieselkraftstoffadditiv aufweisend Blockcopolymere gemäß einem oder mehreren der vorhergehenden Ansprüche, **dadurch gekennzeichnet, daß** das Gewichtsmittel der Molmasse des Copolymers im Bereich von 10 000 - 500 000 g/mol liegt.

**8.** Schmieröladditiv oder Biodieselkraftstoffadditiv aufweisend Blockcopolymere gemäß einem oder mehreren der vorhergehenden Ansprüche, **dadurch gekennzeichnet, daß** die Polydispersität ($M_w/M_n$) im Bereich von 1 bis 12, insbesondere von 1,05 bis 2 liegt.

**9.** Konzentrat als Schmieröladditiv, **dadurch gekennzeichnet, daß** das Konzentrat 15 bis 85 Gew.-% eines oder mehrerer Blockcopolymere gemäß einem oder mehreren der Ansprüche 1 bis 8 enthält.

**10.** Konzentrat gemäß Anspruch 9, **dadurch gekennzeichnet, daß** das Konzentrat zusätzlich organische Lösungsmittel, insbesondere ein Mineralöl und/oder ein synthetisches Öl aufweist.

**11.** Schmieröl aufweisend Schmieröladditiv oder Biodieselkraftstoffadditiv aufweisend Blockcopolymere gemäß einem oder mehreren der Ansprüche 1 bis 8.

**12.** Schmieröl gemäß Anspruch 11, **dadurch gekennzeichnet, daß** das Blockcopolymere gemäß einem oder mehreren der Ansprüche 1 bis 8 in einer Menge im Bereich von 0,01 bis 10 Gew.-%, insbesondere 0,01 bis 2 Gew.-% vorhanden ist.

**13.** Konzentrat gemäß Anspruch 9 oder Schmieröl gemäß Anspruch 11, **dadurch gekennzeichnet, daß** zusätzlich Viskositätsindexverbesserer, Antioxidantien, Korrosionsinhibitoren, Detergentien, Dispergentien, EP-Additive, Entschäumungsmittel, Reibungsminderer und/oder Demulgatoren enthalten sind.

**14.** Biodieselkraftstoff aufweisend Biodieselkraftstoffadditiv aufweisend Blockcopolymere gemäß einem oder mehreren der Ansprüche 1 bis 8.

**15.** Biodieselkraftstoff gemäß Anspruch 14, **dadurch gekennzeichnet, daß** das Blockcopolymere gemäß einem oder mehreren der Ansprüche 1 bis 8 in einer Menge im Bereich von 0,01 bis 10 Gew.-%, insbesondere 0,01 bis 2 Gew.-% vorhanden ist.

**16.** Verfahren zur Herstellung von Schmieröladditiv oder Biodieselkraftstoffadditiv aufweisend Blockcopolymeren gemäß einem oder mehreren der Ansprüche 1 bis 8, **dadurch gekennzeichnet, daß** man die olefinisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert.

**17.** Verwendung von Schmieröladditiv oder Biodieselkraftstoffadditiv aufweisend Copolymeren gemäß einem oder mehreren der Ansprüche 1 bis 8 als Stockpunktverbesserer oder Fließverbesserer.

## Claims

**1.** Lubricating oil additive or biodiesel fuel additive containing block copolymers, obtainable by polymerizing a mixture of olefinically unsaturated monomers which consists of

a) 0.5 to 20 wt% of one or more ethylenically unsaturated ester compounds of the formula (I)

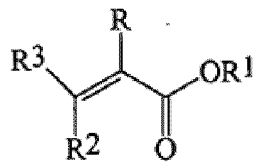

(I),

in which R is hydrogen or methyl, $R^1$ is a linear or branched alkyl radical having 1 to 5 carbon atoms, $R^2$ and $R^3$ independently are hydrogen or a group with the formula -COOR', in which R' is hydrogen or an alkyl group having 1 to 5 carbon atoms,

b) 10 to 98 wt% of one or more ethylenically unsaturated ester compounds of the formula (II)

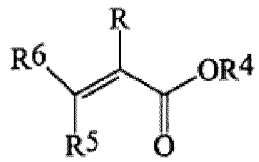

(II),

in which R is methyl, $R^4$ is a linear or branched alkyl radical having 6 to 15 carbon atoms, $R^5$ and $R^6$ independently are hydrogen or a group with the formula -COOR", in which R" is hydrogen or an alkyl group having 6 to 15 carbon atoms,

c) 0.5 to 60 wt% of one or more ethylenically unsaturated ester compounds of the formula (III)

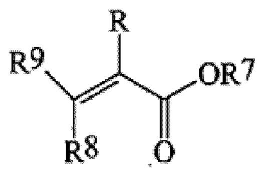

(III),

in which R is hydrogen or methyl, $R^7$ is a linear or branched alkyl radical having 16 to 30 carbon atoms, $R^8$ and $R^9$ independently are hydrogen or a group with the formula -COOR''', in which R''' is hydrogen or an alkyl group having 16 to 30 carbon atoms, and

d) 0 to 50 wt% of comonomer, comprising ethylenically unsaturated monomers which can be copolymerized with the ethylenically unsaturated ester compounds of the formulae (I), (II) and/or (III) and are selected from the group of hydroxyalkyl (meth)acrylates, aminoalkyl (meth)acrylates, aryl (meth)acrylates, methacrylates of ether alcohols, heterocyclic (meth)acrylates, vinyl esters, styrene, substituted styrenes with an alkyl substituent in the side chain, and heterocyclic vinyl compounds, based in each case on the total weight of the ethylenically unsaturated monomers,

where the mixture of the ethylenically unsaturated monomers has been altered discontinuously during chain growth in such a way as to give block copolymers whose blocks contain at least 30 monomer units, and where the aforementioned monomers have been polymerized using initiators which have a transferable atomic group and in the presence of catalysts which comprise at least one transition metal or transition metal compound which is able, with the initiator and/or with the polymer chain containing a transferable atomic group, to form a redox cycle, and in the presence of ligands which are able to form a coordination compound with the metallic catalyst or catalysts.

**2.** Lubricating oil additive or biodiesel fuel additive containing block copolymers according to Claim 1, **characterized in that** the blocks contain at least 50 monomer units.

3. Lubricating oil additive or biodiesel fuel additive containing block copolymers according to claim 1 or 2, **characterized in that** the length of the various blocks of the copolymer have a ratio in the range from 3:1 to 1:3.

4. Lubricating oil additive or biodiesel fuel additive containing block copolymers according to one or more of the preceding claims, **characterized in that** the block copolymer contains at least three blocks.

5. Lubricating oil additive or biodiesel fuel additive containing block copolymers according to one or more of the preceding claims, **characterized in that** the various blocks differ only in the concentration of the monomer units.

6. Lubricating oil additive or biodiesel fuel additive containing block copolymers according to one or more of the preceding claims, **characterized in that** the various blocks feature a concentration difference of at least one monomer unit of 5% or more.

7. Lubricating oil additive or biodiesel fuel additive containing block copolymers according to one or more of the preceding claims, **characterized in that** the weight-average molar mass of the copolymer is in the range of 10 000 - 500 000 g/mol.

8. Lubricating oil additive or biodiesel fuel additive containing block copolymers according to one or more of the preceding claims, **characterized in that** the polydispersity ($M_w/M_n$) is in the range from 1 to 12, more particularly from 1.05 to 2.

9. Concentrate as lubricating oil additive, **characterized in that** the concentrate contains 15 to 85 wt% of one or more block copolymers according to one or more of Claims 1 to 8.

10. Concentrate according to Claim 9, **characterized in that** the concentrate additionally contains organic solvents, more particularly a mineral oil and/or a synthetic oil.

11. Lubricating oil containing lubricating oil additive or biodiesel fuel additive containing block copolymers according to one or more of Claims 1 to 8.

12. Lubricating oil according to Claim 11, **characterized in that** the block copolymer according to one or more of Claims 1 to 8 is present in an amount in the range from 0.01 to 10 wt%, more particularly 0,01 to 2 wt%.

13. Concentrate according to Claim 9 or lubricating oil according to Claim 11, **characterized in that** viscosity index improvers, antioxidants, corrosion inhibitors, detergents, dispersants, EP additives, defoamers, friction reducers and/or demulsifiers are additionally present.

14. Biodiesel fuel containing biodiesel fuel additive containing block copolymers according to one or more of Claims 1 to 8.

15. Biodiesel fuel according to Claim 14, **characterized in that** the block copolymer according to one or more of Claims 1 to 8 is present in an amount in the range from 0.01 to 10 wt%, more particularly 0.01 to 2 wt%.

16. Process for preparing lubricating oil additive or biodiesel fuel additive containing block copolymers according to one or more of Claims 1 to 8, **characterized in that** the olefinically unsaturated monomers are polymerized using initiators which contain a transferable atomic group, and one or more catalysts which comprise at least one transition metal, in the presence of ligands which are able to form a coordination compound with the metallic catalyst or catalysts.

17. Use of lubricating oil additive or biodiesel fuel additive containing copolymers according to one or more of Claims 1 to 8 as pour point improvers or flow improvers.

**Revendications**

1. Additif pour huile lubrifiante ou additif pour carburant de type biodiesel présentant des copolymères séquencés, pouvant être obtenus en ce qu'on polymérise un mélange de monomères oléfiniquement insaturés, constitués par

   a) 0,5 à 20% en poids d'un ou de plusieurs composés de type ester éthyléniquement insaturé de formule (I)

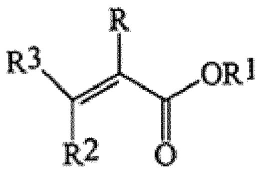

(I),

dans laquelle R représente hydrogène ou méthyle, $R^1$ signifie un radical alkyle linéaire ou ramifié comprenant 1 à 5 atomes de carbone, $R^2$ et $R^3$ représentent, indépendamment, hydrogène ou un groupe de formule -COOR', dans laquelle R' représente hydrogène ou un groupe alkyle comprenant 1 à 5 atomes de carbone,

b) 10 à 98% en poids d'un ou de plusieurs composés de type ester éthyléniquement insaturé de formule (II)

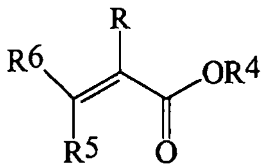

(II)

dans laquelle R représente méthyle, $R^4$ signifie un radical alkyle linéaire ou ramifié comprenant 6 à 15 atomes de carbone, $R^5$ et $R^6$ représentent, indépendamment, hydrogène ou un groupe de formule -COOR", dans laquelle R" représente hydrogène ou un groupe alkyle comprenant 6 à 15 atomes de carbone,

c) 0,5 à 60% en poids d'un ou de plusieurs composés de type ester éthyléniquement insaturé de formule (III)

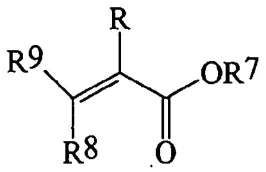

(III),

dans laquelle R représente hydrogène ou méthyle, $R^7$ signifie un radical alkyle linéaire ou ramifié comprenant 16 à 30 atomes de carbone, $R^8$ et $R^9$ représentent, indépendamment, hydrogène ou un groupe de formule -COOR"', dans laquelle R"' représente hydrogène ou un groupe alkyle comprenant 16 à 30 atomes de carbone et

d) 0 à 50% en poids de comonomères, comprenant des monomères éthyléniquement insaturés, qui peuvent être copolymérisés avec les composés de type ester éthyléniquement insaturé de formule (I), (II) et/ou (III) et qui sont choisis dans le groupe formé par les (méth)acrylates d'hydroxylalkyle, les (méth)acrylates d'aminoalkyle, les (méth)acrylates d'aryle, les méthacrylates d'étheralcools, les (méth)acrylates hétérocycliques, les esters de vinyle, le styrène, les styrènes substitués présentant un substituant alkyle dans la chaîne latérale, les composés hétérocycliques de vinyle, à chaque fois par rapport au poids total des monomères éthyléniquement insaturés

le mélange des monomères éthyléniquement insaturés étant modifié de manière discontinue pendant la croissance des chaînes de manière telle qu'on obtient des copolymères séquencés dont les séquences présentent au moins 30 unités monomères,

et les monomères susmentionnés ayant été polymérisés au moyen d'initiateurs, qui présentent un groupe atomique transférable, et en présence de catalyseurs, qui comprennent au moins un métal de transition ou un composé à base de métal de transition, qui peut former un cycle redox avec l'initiateur, ou avec la chaîne polymère, qui présente un groupe atomique transférable, et en présence de ligands qui peuvent former un composé de coordination avec le ou les catalyseurs métalliques.

2. Additif pour huile lubrifiante ou additif pour carburant de type biodiesel présentant des copolymères séquencés selon la revendication 1, **caractérisé en ce que** les séquences présentent au moins 50 unités monomères.

3. Additif pour huile lubrifiante ou additif pour carburant de type biodiesel présentant des copolymères séquencés selon la revendication 1 ou 2, **caractérisé en ce que** les longueurs des différentes séquences du copolymère présentent un rapport dans la plage de 3:1 à 1:3.

4. Additif pour huile lubrifiante ou additif pour carburant de type biodiesel présentant des copolymères séquencés

selon l'une ou plusieurs des revendications précédentes, **caractérisé en ce que** le copolymère séquencé présente au moins trois séquences.

**5.** Additif pour huile lubrifiante ou additif pour carburant de type biodiesel présentant des copolymères séquencés selon l'une ou plusieurs des revendications précédentes, **caractérisé en ce que** les différentes séquences ne se distinguent que par la concentration des éléments monomères.

**6.** Additif pour huile lubrifiante ou additif pour carburant de type biodiesel présentant des copolymères séquencés selon l'une ou plusieurs des revendications précédentes, **caractérisé en ce que** les différentes séquences se distinguent par une différence de concentration d'au moins un élément monomère de 5% ou plus.

**7.** Additif pour huile lubrifiante ou additif pour carburant de type biodiesel présentant des copolymères séquencés selon l'une ou plusieurs des revendications précédentes, **caractérisé en ce que** la moyenne pondérale de la masse molaire du copolymère se situe dans la plage de 10.000-500.000 g/mole.

**8.** Additif pour huile lubrifiante ou additif pour carburant de type biodiesel présentant des copolymères séquencés selon l'une ou plusieurs des revendications précédentes, **caractérisé en ce que** la polydispersité ($M_w/M_n$) se situe dans la plage de 1 à 12, en particulier de 1,05 à 2.

**9.** Concentrat en tant qu'additif pour huile lubrifiante, **caractérisé en ce que** le concentrat contient 15 à 85% en poids d'un ou de plusieurs copolymères séquencés selon l'une ou plusieurs des revendications 1 à 8.

**10.** Concentrat selon la revendication 9, **caractérisé en ce que** le concentrat présente en plus des solvants organiques, en particulier une huile minérale et/ou une huile synthétique.

**11.** Huile lubrifiante présentant un additif pour huile lubrifiante ou un additif pour carburant de type biodiesel présentant des copolymères séquencés selon l'une ou plusieurs des revendications 1 à 8.

**12.** Huile lubrifiante selon la revendication 11, **caractérisée en ce que** les copolymères séquencés selon l'une ou plusieurs des revendications 1 à 8 sont présents en une quantité dans la plage de 0,01 à 10% en poids, en particulier de 0,01 à 2% en poids.

**13.** Concentrat selon la revendication 9 ou huile lubrifiante selon la revendication 11, caractérisé(e) en ce qu'en plus, des agents d'amélioration de l'indice de viscosité, des antioxydants, des inhibiteurs de corrosion, des détergents, les dispersants, des additifs EP (extreme pressure - pression extrême), des antimousses, des agents de diminution du frottement et/ou des désémulsifiants sont contenus.

**14.** Carburant de type biodiesel présentant un additif pour carburant de type biodiesel présentant des copolymères séquencés selon l'une ou plusieurs des revendications 1 à 8.

**15.** Carburant de type biodiesel selon la revendication 14, **caractérisé en ce que** les copolymères séquencés selon l'une ou plusieurs des revendications 1 à 8 sont présents en une quantité dans la plage de 0,01 à 10% en poids, en particulier de 0,01 à 2% en poids.

**16.** Procédé pour la préparation d'un additif pour huile lubrifiante ou d'un additif pour carburant de type biodiesel présentant des copolymères séquencés selon l'une ou plusieurs des revendications 1 à 8, **caractérisé en ce qu'**on polymérise les monomères oléfiniquement insaturés au moyen d'initiateurs, qui présentent un groupe atomique transférable, et d'un ou de plusieurs catalyseurs, qui comprennent au moins un métal de transition, en présence de ligands, qui peuvent former, avec le ou les catalyseurs métalliques, un composé de coordination.

**17.** Utilisation d'un additif pour huile lubrifiante ou d'un additif pour carburant de type biodiesel présentant des copolymères selon l'une ou plusieurs des revendications 1 à 8 comme agent d'amélioration du point de figeage ou comme agent d'amélioration de l'écoulement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2091627 A
- US 2100993 A
- US 2114233 A
- EP 0236844 A
- EP 0945474 A
- US 5219945 A
- US 5807937 A
- US 5763548 A
- WO 9840415 A
- WO 9718247 A
- WO 9747661 A
- WO 9801478 A
- US 5368761 A


### In der Beschreibung aufgeführte Nicht-Patentliteratur


- Vergleiche Ullmanns Enzyklopädie der technischen Chemie. Verlag Chemie, 1981, vol. 20, 548
- **WANG ; MATYJASZEWSKI.** *Macromolekules,* 1995, vol. 28, 7572-7573
- lubricants and related products. Ullmanns Encyclopedia of Industrial Chemistry. 1997
- Ullmann's Encyclopedia of Industrial Chemistry. 1998